# EUROPÄISCHE PATENTSCHRIFT

(11) **EP 0 618 409 B1**
(45) Veröffentlichungstag und Bekanntmachung des Hinweises auf die Patenterteilung: **01.10.1997**
(21) Anmeldenummer: 94104820.9
(22) Anmeldetag: 26.03.1994
(51) Int. Cl.: F24D 3/14

(54) **Fussbodenheizungssystem für Trenndecken**
Under floor heating system for floors
Système de chauffage par le sol pour planchers

(30) Priorität: 31.03.1993 DE 4310484
(43) Veröffentlichungstag der Anmeldung: 05.10.1994
(73) Patentinhaber: Roth Werke GmbH, 35232 Dautphetal-Buchenau (DE)
(72) Erfinder: Roth, Manfred, D-35232 Dautphetal (DE); Nickel, Wolfgang, D-35216 Biedenkopf (DE)
(74) Vertreter: Honke, Manfred, Dr.-Ing.

(56) Entgegenhaltungen:
- CH-A- 663 812
- DE-A- 3 116 963
- DE-A- 3 125 318

## Beschreibung

Die Erfindung betrifft ein Fußbodenheizungssystem für Trenndecken, insbesondere Wohnungstrenndecken, - mit
einer Dämmauflage aus Styrolpor-Dämmplatten,
auf der Dämmauflage verlegten Heizrohren aus Kunststoff und
U-Haltern aus Kunststoff für die Heizrohre,
wobei das Fußbodenheizungssystem auf die Trenndecke aufgelegt ist, wobei die U-Halter mit ihrem Steg die Heizrohre überfassen und mit ihren Schenkeln in die Dämmauflage eingestoßen sowie in der Dämmauflage mit Widerhakenelementen verankert sind, wobei auf die Dämmauflage mit den verlegten Heizrohren ein schwimmender Estrich aufgebracht ist. Die Dämmauflage hat bei einem Fußbodenheizungssystem des beschriebenen Aufbaues in dämmtechnischer Hinsicht eine doppelte Funktion, nämlich die einer Wärmedämmung zur Trenndecke hin und die einer Schalldämmung, insbes. einer Trittschalldämmung. - System steht im Rahmen der Erfindung für einen Aufbau mit in physikalischer Hinsicht mehrfachem Ordnungsprinzip als Lehre zum technischen Handeln. Styrolpor steht für Schaumstoffe aus Polystyrol und Styrolmischpolimerisaten. Diese Schaumstoffe sind auch unter dem Warenzeichen Styropor bekannt (vgl. Römpp "Chemie Lexikon", Band 5, 1992, Seite 4357).

Bei dem aus der Praxis bekannten Fußbodenheizungssystem, von dem die Erfindung ausgeht, ist zusätzlich auf die Styrolpor-Dämmauflage eine Folienschicht aufgebracht, und zwar zumeist durch Kleben mit der Styrolpor-Dämmauflage verbunden. Die Folienschicht dient dazu, die Trittfestigkeit herzustellen, die erforderlich ist, da die verlegte Dämmauflage bei der Montage der Heizrohre begangen werden muß. Außerdem sind oft auch andere, nicht unbeachtliche komplexe Baustellenbeanspruchungen aufzunehmen. Wird die Dämmauflage durch Begehen oder andere Baustellenbeanspruchungen, wenn auch nur an singulären Stellen, erheblich beschädigt, so können, z. B. durch eindringenden Estrich, störende Wärmebrücken bzw. Kältebrücken und Schallbrücken entstehen. Die vorstehend beschriebenen bekannten Maßnahmen machen die Dämmauflage begehbar, tragen jedoch zur Wärmedämmung und Schalldämmung nicht bei. Insoweit handelt es sich um systemfremde Bauteile. Ein weiterer Nachteil entsteht, wenn aus Umweltschutzgründen verlangt wird, daß die Dämmauflage in einen Recyclingkreis für Styrolpor einführbar ist. Hier muß im Rahmen der bekannten Maßnahmen die Folie zunächst arbeitsaufwendig von der Dämmauflage entfernt werden. Im übrigen sind Dämmauflagen bekannt, die aus zwei Styrolpor-Platten ohne Zwischenschaltung einer Folienschicht zweischalig geschichtet sind. Die beiden Platten sind nicht miteinander verbunden oder mit einem Kleber verklebt. Das erfüllt ohne weiteres die Forderungen in bezug auf Schall- und Wärmedämmung nicht. Der Kleber stört, wenn Recyclingfähigkeit verlangt wird.

Der Erfindung liegt die Aufgabe zugrunde, ein Fußbodenheizungssystem zu schaffen, bei dem die Dämmauflage systemfremde Elemente nicht mehr aufweist, so daß sie in einen Recyclingkreis eingeführt werden kann. Gleichzeitig soll das Fußbodenheizungssystem sowohl in bezug auf die Wärmedämmung als auch in bezug auf die Schalldämmung verbessert werden - und wenig aufwendig montierbar gestaltet werden.

Aus der DE-A-3 125 318 ist ein Halter zur Fixierung eines Heizrohres einer Fussbodenheizung entnehmbar. Dammplatten für eine Klimatisiervorrichtung für eine Flächenheizung sind in der CH-A-663 812 beschrieben.

Zur Lösung dieser Aufgabe lehrt die Erfindung, ausgehend von dem eingangs beschriebenen Fußbodenheizungssystem, die Kombination der folgenden Merkmale:
a) die Styrolpor-Dämmauflage besteht aus einer unteren Schicht mit einem Raumgewicht von 10 bis 15 Kg/m³ und aus einer oberen Schicht mit einem Raumgewicht, welches um einen Faktor von 1,5 bis 3 größer ist als das Raumgewicht der unteren Schicht ,
b) die beiden Schichten gehören einschaligen Dämmplatteneinheiten an,
c) die Schenkel der U-Halter besitzen in Einstoßrichtung V-förmig angeordnete, zum zugeordneten Schenkel hin elastisch verformbare und unter dem Einfluß von an den U-Haltern angreifenden Zugkräften aufspreizbare Widerhakenelemente und die Widerhakenelemente befinden sich im eingestoßenen Zustand in der unteren Schicht der einschaligen Dämmplatteneinheiten,
wobei die obere Schicht der einschaligen Dämmplatteneinheiten durch ihre Schichtdicke von 10 bis 20 mm trittfest ausgebildet ist und die Dämmplatteneinheiten durch ihre Plattendicke insgesamt so eingerichtet sind, daß sie den Anforderungen von DIN 4109 genügen. - Einschalig bedeutet, daß die Dämmplatteneinheiten sich wie eine einheitliche Schale, gleichsam monolithisch, verhalten, obgleich sie zwei Schichten aufweisen. Diese sind, frei von systemfremden Elementen, stoffschlüssig vereinigt.

Nach bevorzugter Ausführungsform der Erfindung bestehen die einschaligen Dämmplatteneinheiten aus einer unteren Schicht mit einem Raumgewicht von etwa 12 kg/m³, und einer oberen Schicht mit einem Raumgewicht von 25 bis 35 kg/m³, vorzugsweise von etwa 30 kg/m³.

Die Erfindung geht von der Erkenntnis aus, daß die Trittfestigkeit der Dämmauflage nicht über systemfremde Bauteile, wie Folien, hergestellt werden muß und Styrolpor selbst diese Funktion übernehmen kann, aber gleichzeitig wärmedämmend und schalldämmend wirkt. Arbeitet man entsprechend den Merkmalen a) und b) sowie nach der beschriebenen Abstimmungsregel, wonach die obere Schicht der platteneinheiten durch ihre Schichtdicke trittfest ausgebildet ist und die Dämmplatteneinheiten durch ihre Plattendicke insgesamt den Anforderungen von DIN 4109 genügen, so erreicht man bei massenmäßig praktisch gleichem Materialeinsatz wie bei den bekannten Maßnahmen nicht nur eine wesentlich verbesserte Schalldämmung, sondern auch überraschenderweise eine verbesserte Wärmedämmung. Dabei wird mit dem Merkmal c) gleichzeitig erreicht, daß die U-Halter in vertikaler Richtung und wegen der Länge der Schenkel gegen Verschwenken sicher gehalten sind. Da die Widerhakenelemente in der beschriebenen Weise elastisch verformbar sind und die obere Schicht der Dämmplatteneinheiten eine verhältnismäßig große Festigkeit aufweisen, entstehen in der oberen Schicht der Dämmplatteneinheiten beim Einstoßen der U-Haken keine störenden Löcher, in die wärmebrücken- oder schallbrückenbildend Estrich eindringen könnte. Die U-Haken sind unter der oberen Schicht der Dämmplatteneinheiten sicher gehalten. Nichtsdestoweniger können die U-Haken mit einfachen Werkzeugen und unschwer entfernt werden, wenn ein erfindungsgemäßes Fußbodenheizungssystem ausgebaut und die Dämmauflage dem Recyclingkreis zugeführt werden muß.

Im einzelnen bestehen im Rahmen der Erfindung mehrere Möglichkeiten der weiteren Ausbildung und Gestaltung eines erfindungsgemäßen Fußbodenheizungssystems.

In bezug auf die Bemessung bestehen im Rahmen der Erfindung mehrere Möglichkeiten. Für die meisten Einsatzfälle empfiehlt die Erfindung eine Ausführungsform, bei der die untere Schicht eine Dicke von 30 bis 45 mm, vorzugsweise von etwa 38 mm, aufweist. Die obere Schicht besitzt regelmäßig und in Kombination zu den vorstehend angegebenen Parametern eine Dicke von 10 bis 20 mm, vorzugsweise von etwa 15 mm.

Nach bevorzugter Ausführungsform der Erfindung sind die Widerhakenelemente an den einzelnen Schenkeln der U-Haken einerseits, an den Spitzen der Schenkel andererseits und außerdem, im eingestoßenen Zustand betrachtet, im oberen Bereich der unteren Schicht der Dämmplatteneinheiten, die obere Schicht unterfassend, angeordnet. Es empfiehlt sich, zumindest die Widerhakenelemente im oberen Bereich der unteren Schicht doppelt anzuordnen. Als besonders vorteilhaft hat es sich erwiesen, stets die Merkmale der Ansprüche 7 und 8 zu verwirklichen.

Im folgenden wird die Erfindung anhand einer lediglich ein Ausführungsbeispiel darstellenden Zeichnung ausführlicher erläutert.

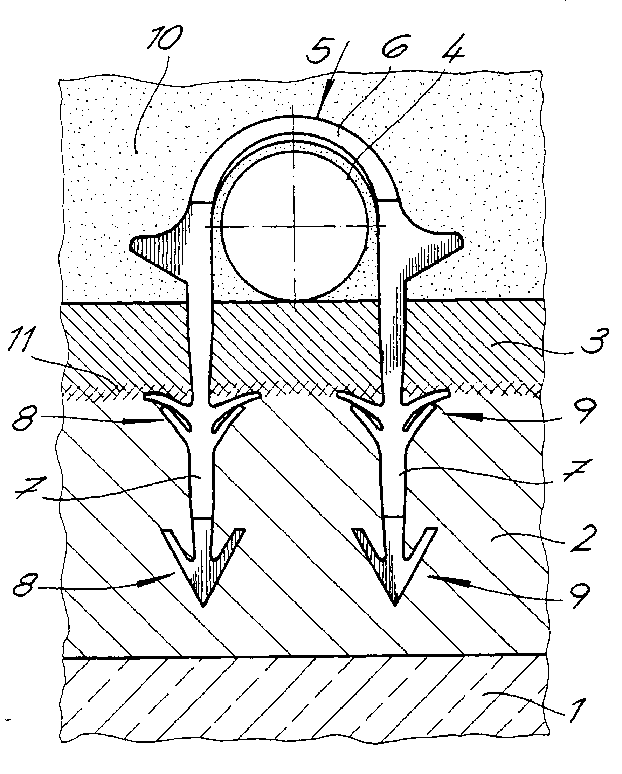

Die einzige Figur zeigt einen Schnitt durch ein erfindungsgemäßes Fußbodenheizungssystem.

Das in der Figur dargestellte Fußbodenheizungssystem ist auf einer nur angedeuteten Trenndecke 1 angeordnet. Zum grundsätzlichen Aufbau gehören eine Dämmauflage 2, 3 aus Styrolpor-Dämmplatten , auf der Dämmauflage 2, 3 verlegte Heizrohre aus Kunststoff und U-Halter aus Kunststoff für die Heizrohre 4. Das Fußbodenheizungssystem ist auf die Trenndecke 1 aufgelegt. Die U-Halter 5 überfassen mit ihrem Steg 6 die Heizrohre 4. Sie sind mit ihren Schenkeln 7 in die Dämmauflage 2, 3 eingestoßen und in der Dämmauflage 2, 3 mit Widerhakenelementen 8, 9 verankert. Auf die Dämmauflage 2, 3 mit den verlegten Heizrohren 4 ist ein schwimmender Estrich 10 aufgebracht, der in der Zeichnung ebenfalls angedeutet wurde.

Die Styrolpor-Dämmauflage 2, 3 besteht aus einer unteren Schicht 2 und einer oberen Schicht 3. Das wurde in der einzigen Figur durch unterschiedliche Schraffur angedeutet. Die Schichten 2, 3 gehören einschaligen Dämmplatteneinheiten an. Der stoffschlüssige Verbund der Schichten 2, 3 ist durch die Kreuzschraffur 11 angedeutet. Der Verbund ist frei von systemfremden Elementen. Die untere Schicht 2 mit der Schraffur aus weit beabstandeten Strichen besitzt ein Raumgewicht von 10 bis 15 kg/m³. Vorzugsweise liegt das Raumgewicht im Bereich von etwa 12 kg/m³. Die obere Schicht 3 besitzt ein höheres Raumgewicht und zur Andeutung des höheren Raumgewichtes eine Schraffur mit dichter angeordneten Schraffurlinien. Das Raumgewicht mag im Bereich von 25 bis 35 kg/m³, vorzugsweise bei etwa 30 kg/m³ liegen. Die beiden Schichten 2, 3 bilden, wie gewohnt, jeweils eine einschalige Dämmplatteneinheit. Die Schenkel 7 der U-Halter 5 besitzen in Einstoßrichtung V-förmig angeordnete, zum zugeordneten Schenkel 7 hin elastisch verformbare und unter dem Einfluß von an den U-Haltern 5 angreifenden Zugkräften aufspreizbare Widerhakenelemente 8, 9. Die Widerhakenelemente 8, 9 befinden sich im eingestoßenen Zustand in der unteren Schicht 2 der Dämmplatteneinheiten. Bei diesem grundsätzlichen Aufbau ist erfindungsgemäß eine besondere Abstimmung verwirklicht, die zeichnerisch nicht darstellbar ist und darin besteht, daß die obere Schicht 2 der Dämmplatteneinheiten durch ihre Schichtdicke trittfest ausgebildet ist, und daß die Dämmplattenauflage ihrerseits durch ihre Plattendicke insgesamt den Anforderungen von DIN 4109 genügt.

Die beiden Schichten 2, 3 der Dämmplatteneinheiten sind einstückig gefertigt. Die untere Schicht 2 mag eine Dicke im Bereich von 30 bis 45 mm aufweisen. Sie liegt im Ausführungsbeispiel bei etwa 38 mm. Die obere Schicht 3 besitzt eine Dicke im Bereich von 10 bis 20 mm und besitzt im Ausführungsbeispiel eine Dicke von 15 mm.

Im Ausführungsbeispiel und nach bevorzugter Ausführungsform der Erfindung sind die Widerhakenelemente 8, 9 an den einzelnen Schenkeln 7 der U-Haken einerseits, an den Spitzen der Schenkel andererseits und außerdem, im eingestoßenen Zustand betrachtet, im oberen Bereich der unteren Schicht 2 der Dämmplatteneinheiten, die obere Schicht 3 unterfassend, angeordnet. Sie sind im oberen Bereich der unteren Schicht 2 jeweils doppelt vorgesehen. Dabei stützen sich die beiden Widerhakenelemente 8, 9 auch gegeneinander ab.

Es versteht sich, daß das erfindungsgemäße Fußbodenheizungssystem mit den üblichen Randdämmstreifen ausgerüstet ist. Das im Ausführungsbeispiel beschriebene Fußbodenheizungssystem kann ausnahmsweise auch auf Kellerdecken u. dgl. angeordnet werden.

## Patentansprüche

1. Fußbodenheizungssystem für Trenndecken (1), insbesondere Wohnungstrenndecken, - mit
einer Dämmauflage (2, 3) aus Styrolpor-Dämmplatten,
auf der Dämmauflage (2, 3) verlegten Heizrohren (4) aus Kunststoff und
U-Haltern (5) aus Kunststoff für die Heizrohre (4),
wobei das Fußbodenheizungssystem auf die Trenndecke (1) aufgelegt ist, wobei die U-Halter (5) mit ihrem Steg (6) die Heizrohre (4) überfassen und mit ihren Schenkeln (7) in die Dämmauflage (2, 3) eingestoßen sowie in der Dämmauflage (2, 3) mit Widerhakenelementen (8, 9) verankert sind, wobei auf die Dämmauflage (2, 3) mit den verlegten Heizrohren (4) ein schwimmender Estrich (10) aufgebracht ist und wobei die Kombination der folgenden Merkmale verwirklicht ist:
a) die Styrolpor-Dämmauflage besteht aus einer unteren Schicht (2) mit einem Raumgewicht von 10 bis 15 kg/m³ und aus einer oberen Schicht (3) mit einem Raumgewicht, welches um einen Faktor von 1,5 bis 3 größer ist als das Raumgewicht der unteren Schicht (2),
b) die beiden Schichten (2 bzw. 3) gehören einschaligen Dämmplatteneinheiten an,
c) die Schenkel (7) der U-Halter (5) besitzen in Einstoßrichtung V-förmig angeordnete, zum zugeordneten Schenkel hin elastisch verformbare und unter dem Einfluß von an den U-Haltern (5) angreifenden Zugkräften aufspreizbare Widerhakenelemente (8, 9) und die Widerhakenelemente (8, 9) befinden sich im eingestoßenen Zustand in der unteren Schicht (2) der einschaligen Dämmplatteneinheiten,
wobei die obere Schicht (3) der einschaligen Dämmplatteneinheiten durch eine Schichtdicke von 10 bis 20 mm trittfest ausgebildet ist und die Dammplatteneinheit durch ihre Plattendicke insgesamt so eingerichtet sind, daß sie den Anforderungen von DIN 4109 genugen.

2. Fußbodenheizungssystem nach Anspruch 1, wobei die obere Schicht (3) der einschaligen Dämmplatteneinheit ein Raumgewicht besitzt, welches um einen Faktor von etwa 2 größer ist als das Raumgewicht der unteren Schicht.

3. Fußbodenheizungssystem nach einem der Ansprüche 1 oder 2, wobei die einschaligen Dämmplatteneinheiten aus einer unteren Schicht (2) mit einem Raumgewicht von etwa 12 kg/m³, und einer oberen Schicht (3) aus einem Raumgewicht von 25 bis 35 kg/m³, vorzugsweise von etwa 30 kg/m³ bestehen.

4. Fußbodenheizungssystem nach einem der Ansprüche 1 bis 3, wobei die untere Schicht (2) eine Dicke von 30 bis 45 mm, vorzugsweise von etwa 38 mm, aufweist.

5. Fußbodenheizungssystem nach einem der Ansprüche 1 bis 4, wobei die obere Schicht (3) eine Dicke von etwa 15 mm aufweist.

6. Fußbodenheizungssystem nach einem der Ansprüche 1 bis 5, wobei die Widerhakenelemente (8, 9) einerseits an den Spitzen der Schenkel (7) und andererseits im mittleren Bereich der Schenkel (7) so angeordnet sind, daß sie im eingestoßenen Zustand betrachtet, im oberen Bereich der unteren Schicht (2) der Dämmplatteneinheiten, die obere Schicht (3) unterfassend, angeordnet sind.

7. Fußbodenheizungssystem nach Anspruch 6, wobei zumindest die Widerhakenelemente (8, 9) im oberen Bereich der unteren Schicht (2) doppelt angeordnet sind.

8. Fußbodenheizungssystem nach einem der Ansprüche 1 bis 7, wobei die Dämmplatteneinheiten eine Mindestzugfestigkeit von 0,02 N/mm² aufweisen.

9. Fußbodenheizungssystem nach einem der Ansprüche 1 bis 8, wobei die Dämmplatteneinheiten eine dynamische Steifigkeit nach DIN 18164 im Bereich von 10 bis 30 MN/m³ aufweisen.

## Claims

1. A floor heating system for intermediate floors (1) in flats, particularly in residential accommodation, comprising:
an insulating substrate (2, 3) made of Styrolpor insulating boards,
plastic heating pipes (4) laid on the insulating substrate (2, 3) and
plastic U-shaped holders (5) for the heating pipes (4),
wherein the floor heating system is laid on the intermediate floor (1), and the web (6) of the holders (5) extends over the heating pipes (4) and the arms (7) thereof are pushed into the insulating substrate (2, 3) and anchored therein by barbed elements (8, 9), a floating screed (10) being applied to the insulating substrate (2, 3) in which the pipes (4) are laid, and wherein the following features are embodied in combination:
a) the Styrolpor insulating substrate consists of a lower layer (2) having a specific gravity of 10 to 15 kg/m³ and an upper layer (3) having a specific gravity greater by a factor of 1.5 to 3 than the specific gravity of the lower layer (2),
b) the two layers (2 and 3) belong to homogeneous insulating-board units, and
c) the arms (7) of the U-holders (5) in the direction of pushing in have V-shaped barbed elements (8, 9) which are elastically deformable relative to the associated arm and are spreadable by the tensile forces acting on the U-holders (5) and the barbed elements (8, 9) when pushed in are in the lower layer (2) of the homogeneous damping-board units, and
wherein the upper layer (3) of the homogeneous damping-board units is given a thickness of 10 to 20 mm so as to be non-crushable and the insulating-board unit is made up of boards having a total thickness which meets the requirements of DIN 4109.

2. A floor heating system according to claim 1, wherein the upper layer (3) of the homogeneous insulating-board unit has a specific gravity greater by a factor of approximately 2 than the specific gravity of the lower layer.

3. A floor heating system according to claim 1 or 2, wherein the homogeneous damping-board units comprise a lower layer (2) having a specific gravity of about 12 kg/m³ and an upper layer (3) having a specific gravity of 25 to 35 kg/m³, preferably about 30 kg/m³.

4. A floor heating system according to any of claims 1 to 3, wherein the lower layer (2) has a thickness of 30 to 45 mm, preferably about 38 mm.

5. A floor heating system according to any of claims 1 to 4, wherein the upper layer (3) has a thickness of about 15 mm.

6. A floor heating system according to any of claims 1 to 5, wherein the barbed elements (8, 9) are disposed on the one hand on the tips of the arms (7) and on the other hand in the central region of the arms (7) so that, when considered in the pushed-in state, they are disposed in the upper region of the lower layer (2) of the damping-board units and grip underneath the upper layer (3).

7. A floor heating system according to claim 6, wherein at least the barbed elements (8, 9) in the upper region of the lower layer (2) are doubled.

8. A floor heating system according to any of claims 1 to 7, wherein the heating-board units have a minimum tensile strength of 0.02 N/mm².

9. A floor heating system according to any of claims 1 to 8, wherein the insulating-board units have a dynamic rigidity to DIN 18164 in the range from 10 to 30 MN/m³.

## Revendications

1. Système de chauffage par le sol pour des planchers (1), en particulier des planchers de logements, comprenant un revêtement isolant (2, 3) constitué de plaques isolantes de Styrolpor, des tuyaux de chauffage (4) en matière plastique posés sur le revêtement isolant (2, 3), et des supports en U (5) en matière plastique pour les tuyaux de chauffage (4), le système de chauffage par le sol étant posé sur le plancher (1), les supports en U (5) recouvrant avec leurs dos (6) les tuyaux de chauffage (4) et étant enfoncés avec leurs branches (7) dans le revêtement isolant (2, 3) et ancrés dans ledit revêtement isolant (2, 3) avec des éléments barbelés (8, 9), le revêtement isolant (2, 3) avec les tuyaux de chauffage (4) posés étant recouverts d'une chape flottante (10), et dans lequel est réalisée la combinaison des caractéristiques suivantes :
a) le revêtement isolant en Styrolpor se compose d'une couche inférieure (2) d'un poids spécifique de 10 à 15 kg/m³, et d'une couche supérieure (3) dont le poids spécifique est supérieur d'un facteur de 1,5 à 3 au poids spécifique de la couche inférieure (2),
b) les deux couches (2 et respectivement 3) font partie d'unités de plaques isolantes à une nappe,
c) les branches (7) des supports en U (5) comportent des éléments barbelés (8, 9) qui présentent une forme en V dans la direction d'enfoncement, peuvent être déformés élastiquement en direction de la branche associée et écartés sous l'effet de forces de traction agissant sur les supports en U (5), et les éléments barbelés (8, 9) se situent, à l'état enfoncé, dans la couche inférieure (2) des unités de plaques isolantes,
la couche supérieure (3) des unités de plaques isolantes permettant de marcher dessus grâce à une épaisseur de couche de 10 à 20 mm et les unités de plaques isolantes étant globalement agencées, du fait de leur épaisseur de couche, de manière qu'elles satisfont aux exigences de DIN 4109.

2. Système de chauffage par le sol selon la revendication 1, dans lequel la couche supérieure (3) de l'unité de plaque isolante en une nappe présente un poids spécifique qui est supérieur d'un facteur d'environ 2 au poids spécifique de la couche inférieure.

3. Système de chauffage par le sol selon l'une des revendications 1 ou 2, dans lequel les unités de plaques isolantes en une nappe sont constituées par une couche inférieure (2) d'un poids spécifique d'environ 12 kg/m³ et d'une couche supérieure (3) d'un poids spécifique de 25 à 35 kg/m³, de préférence d'environ 30 kg/m³.

4. Système de chauffage par le sol selon l'une des revendications 1 à 3, dans lequel la couche inférieure (2) présente une épaisseur de 30 à 45 mm, de préférence d'environ 38 mm.

5. Système de chauffage par le sol selon l'une des revendications 1 à 4, dans lequel la couche supérieure (3) présente une épaisseur d'environ 15 mm.

6. Système de chauffage par le sol selon l'une des revendications 1 à 5, dans lequel les éléments barbelés (8, 9) sont disposés d'une part aux pointes des branches (7) et d'autre part dans la partie médiane des branches (7) de manière que, vu à l'état enfoncé, ils se situent dans la partie supérieure de la couche inférieure (2) des unités de plaques isolantes en passant sous la couche supérieure (3).

7. Système de chauffage par le sol selon la revendication 6, dans lequel au moins les éléments barbelés (8, 9) sont disposés en double dans la partie supérieure de la couche inférieure (2).

8. Système de chauffage par le sol selon l'une des revendications 1 à 7, dans lequel les unités de plaques isolantes présentent une résistance à la traction minimale de 0,02 N/mm².

9. Système de chauffage par le sol selon l'une des revendications 1 à 8, dans lequel les unités de plaques isolantes présentent une rigidité dynamique selon DIN 18164 de l'ordre de 10 à 30 MN/m³.
